(19) Europäisches Patentamt / European Patent Office / Office européen des brevets

(11) **EP 4 592 509 A1**

(12) **EUROPEAN PATENT APPLICATION**
published in accordance with Art. 153(4) EPC

(43) Date of publication:
**30.07.2025 Bulletin 2025/31**

(21) Application number: **23856144.3**

(22) Date of filing: **18.05.2023**

(51) International Patent Classification (IPC):
**F01N 11/00** *(2006.01)* **G01N 29/024** *(2006.01)*
**G01N 27/02** *(2006.01)*

(52) Cooperative Patent Classification (CPC):
**F01N 9/00; F01N 11/00; G01N 27/02;**
**G01N 29/024; Y02T 10/40**

(86) International application number:
**PCT/CN2023/095041**

(87) International publication number:
**WO 2024/041051 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.08.2022 CN 202211016931**

(71) Applicant: **Ningbo Kaishi Environmental Protection Technology Co., Ltd Ningbo, Zhejiang 315000 (CN)**

(72) Inventor: **QI, Baohua Ningbo, Zhejiang 315000 (CN)**

(74) Representative: **HGF HGF Limited 1 City Walk Leeds LS11 9DX (GB)**

(54) **SENSOR FOR MEASURING QUALITY OF UREA SOLUTION, AND METHOD**

(57) Disclosed are a sensor and method for measuring quality of a urea solution, the sensor comprises a quality sensing element and a signal processing unit, the quality sensing element is covered by the urea solution, and the signal processing unit is electrically connected with the quality sensing element; the quality sensing element is configured for receiving an excitation signal generated by the signal processing unit, generating a sensing signal, and sending the sensing signal to the signal processing unit; and the signal processing unit is configured for generating the excitation signal, sending the excitation signal to the quality sensing element, receiving the sensing signal sent by the quality sensing element, and calculating a quality sensing value of the urea solution according to the sensing signal, and the quality sensing value of the urea solution comprises a urea concentration and an impurity ion concentration in the urea solution. The sensor is capable of detecting impurity ions and accurately measuring the urea concentration, and is also capable of diagnosing the so-called IR problem that the value sensed by the sensor is within a normal range but is not accurate.

FIG. 2

## Description

## TECHNICAL FIELD

The present invention belongs to the field of urea solution quality detection, and particularly relates to a sensor and method for measuring quality of a urea solution.

## BACKGROUND

In the application of selective catalytic reduction (SCR), a urea solution will be added to exhaust gas generated by an engine. Under an action of high-temperature exhaust gas, the urea solution generates ammonia (NH3) through pyrolysis and hydrolysis of urea, and then the ammonia reacts with a nitrogen oxide (NOx) in the exhaust gas with the help of an SCR catalyst and eliminates the nitrogen oxide. Limited by a reaction ratio of the ammonia to the nitrogen oxide, in order to avoid ammonia leakage or high nitrogen oxide emission, it is necessary to accurately control a dosage of the urea solution, and meanwhile, it is also necessary to keep a urea concentration in the urea solution constant. For the application of diesel engines, according to requirements of ISO 22241 standard, an eutectic urea solution (32.5% wt) with a lowest freezing temperature, which is a diesel exhaust fluid (DEF), is usually used as a reductant carrier.

In urea metering control, a substandard urea solution (a urea solution failed to meet the requirements of ISO22241 standard) may lead to an emission problem or a system fault. For example, when the DEF is diluted, low-concentration urea in the solution may lead to the emission problem, while impurities in the solution, such as some metal ions (calcium, zinc, magnesium, iron, chromium, nickel, sodium, potassium, etc.) contained in tap water, or a non-urea solution (such as fuel oil mistakenly added to a urea tank) may damage the SCR catalyst. In order to avoid the emission problem, it is necessary to monitor the urea concentration in the DEF, and meanwhile, it is also necessary to monitor the impurities in the DEF to prevent the substandard solution from entering the SCR system.

Most DEF sensors need to be mounted in the urea tank. However, in order to avoid a supply problem of the DEF caused by vacuum, the urea tank must be provided with an opening to the surrounding environment, and air makes contact with the DEF through the opening. Under many conditions, such as shaking, pressure change, and stirring caused by suction or return movement of a DEF pump, bubbles may be generated in the DEF. However, these bubbles can reduce a performance of the DEF sensor, and even lead to temporary disability. When the bubbles are attached to a surface of a sensor probe (these bubbles are difficult to disappear by themselves), these bubbles may cause long-term disability of the DEF sensor.

In addition, there is a false alarm of DEF concentration triggered due to the problem of the DEF sensor in the prior art, and the DEF sensor itself cannot be diagnosed.

## SUMMARY

Objective of invention: the technical problem to be solved by the present invention is to provide a sensor and method for measuring quality of a urea solution aiming at the defects in the prior art.

In order to solve the above technical problem, in a first aspect, a sensor for measuring quality of a urea solution is disclosed, which comprises a quality sensing element and a signal processing unit, wherein the quality sensing element is completely covered by the urea solution, and the signal processing unit is electrically connected with the quality sensing element;

the quality sensing element is configured for receiving an excitation signal generated by the signal processing unit, generating a sensing signal, and sending the sensing signal to the signal processing unit; and
the signal processing unit is configured for generating the excitation signal, sending the excitation signal to the quality sensing element, receiving the sensing signal sent by the quality sensing element, and calculating a quality sensing value of the urea solution according to the sensing signal, and the quality sensing value of the urea solution comprises a urea concentration and an impurity ion concentration in the urea solution.

Further, the quality sensing element comprises an impedance sensing element and an ultrasonic sensing element, the impedance sensing element comprises a first electrode and a second electrode, a urea solution between the first electrode and the second electrode is communicated with a urea solution in the ultrasonic sensing element, and one end of the second electrode is electrically connected to the signal processing unit through a second signal line; one end of the first electrode is electrically connected to the signal processing unit through a first signal line; and the ultrasonic sensing element is electrically connected to the signal processing unit through a fifth signal line, and is configured for generating an ultrasonic wave according to the excitation signal sent by the signal processing unit, transmitting and receiving the ultrasonic wave, and sending a received ultrasonic signal to the signal processing unit.

Further, the signal processing unit comprises a central processing unit, an ultrasonic signal processing sub unit and an impedance signal processing sub unit, and

the central processing unit is configured for sending commands to the ultrasonic signal processing sub unit and the impedance signal processing sub unit, receiving the sensing signal processed by the ultrasonic signal processing sub unit and the impedance signal processing sub unit, and calculating the quality sensing value of the urea solution according to the sensing signal;

the ultrasonic signal processing sub unit is electrically connected with the ultrasonic sensing element through the fifth signal line, and is configured for receiving a first command sent by the central processing unit, generating a first excitation signal, sending the first excitation signal to the ultrasonic sensing element, receiving the ultrasonic signal sent by the ultrasonic sensing element, processing the ultrasonic signal, and then sending the ultrasonic signal to the central processing unit; and

the impedance signal processing sub unit is electrically connected with one end of the first electrode through the first signal line and electrically connected with one end of the second electrode through the second signal line, and is configured for receiving a second command sent by the central processing unit, generating a second excitation signal, sending the second excitation signal to the first electrode and the second electrode respectively, receiving an impedance sensing signal sent by the first electrode, processing the impedance sensing signal, and then sending the impedance sensing signal to the central processing unit.

Further, the signal processing unit further comprises a resistance measurement module, and the resistance measurement module is electrically connected with the other end of the first electrode through a sixth signal line, and is configured for measuring a resistance of the first electrode, and sending the resistance value to the central processing unit.

Further, the signal processing unit further comprises a resistance measurement module, the impedance sensing element further comprises a first temperature sensing element, the first temperature sensing element is configured for measuring a temperature of the urea solution between the first electrode and the second electrode, and is electrically connected with the resistance measurement module through an eighth signal line, and the resistance measurement module is configured for measuring a resistance value of the first temperature sensing element, and sending the resistance value to the central processing unit.

**In** a second aspect, a method for measuring quality of a urea solution is disclosed, which comprises the following steps of:

step 1: sending an excitation signal to a quality sensing element by a signal processing unit, wherein the excitation signal comprises a first excitation signal sent to an ultrasonic sensing element and a second excitation signal sent to a first electrode and a second electrode;

step 2: receiving the excitation signal generated by the signal processing unit, generating a sensing signal, and sending the sensing signal to the signal processing unit by the quality sensing element, wherein the sensing signal comprises an ultrasonic signal and an impedance sensing signal; and

step 3: receiving the sensing signal sent by the quality sensing element, and calculating a quality sensing value of the urea solution according to the sensing signal by the signal processing unit, wherein the calculating the quality sensing value of the urea solution comprises calculating a urea concentration in the urea solution and calculating an impurity ion concentration in the urea solution.

Further, in the step 3, the calculating the urea concentration in the urea solution, comprises:

step 3.1: judging whether the ultrasonic sensing element is available;

step 3.2: when the ultrasonic sensing element is available, calculating the urea concentration in the urea solution by using the ultrasonic signal; and

step 3.3: when the ultrasonic sensing element is unavailable, calculating the urea concentration in the urea solution by using the impedance sensing signal.

The ultrasonic signal is insensitive to impurity ions but sensitive to the urea concentration, so that the urea concentration in the urea solution can be accurately measured; and the impedance sensing signal is sensitive to the impurity ions but poor in selectivity, and a resolution of the impedance sensing signal to the urea concentration may be affected by a high sensitivity to ionic impurities, thus being not easy to improve. When the ultrasonic sensing element is available, the urea concentration in the urea solution is calculated by using the ultrasonic signal; and when the ultrasonic sensing element is unavailable, for example, in a driving process of an automobile, the urea solution may generate bubbles, these bubbles can reduce a performance of the ultrasonic sensing element, and even lead to temporary disability, and when the bubbles are attached to a probe surface of the ultrasonic sensing element (these bubbles are difficult to disappear by themselves), these bubbles may cause long-term disability of the ultrasonic sensing element. Impurities will not be added in the driving process of the automobile, the urea concentration measured by using the impedance sensing signal will not be affected by the ionic impurities, and at this time, the urea concentration in the urea solution may be calculated by using the impedance sensing signal.

Further, the step 3.1 comprises: recording an amplitude value of the ultrasonic signal in the sensing signal as S_amp, comparing the amplitude value S_amp of the ultrasonic signal with a first threshold Thd_samp, and when the S_amp is not higher than the Thd_samp, judging the ultrasonic sensing element to be unavailable, which is expressed by a state flag

$$Stat\_QU=1;$$

and

when the S_amp is higher than the Thd_samp, obtaining a peak time shift T_sft of the ultrasonic signal by calculating a difference between peak time Tpk and a normal value Tpk0:

$$T\_sft=Tpk-Tpk0;$$

and

comparing the peak time shift T_sft of the ultrasonic signal with a second threshold Thd_Tsft, and when the T_sft is not higher than the Thd_Tsft, judging the ultrasonic sensing element to be unavailable, which is expressed by the state flag Stat_QU=1; and when the T_sft is higher than the Thd_Tsft, judging the ultrasonic sensing element to be available, which is expressed by a state flag Stat_QU=0.

By detecting a distortion of the ultrasonic signal, comprising an amplitude change and a peak wave shift of the ultrasonic signal, whether the ultrasonic sensing element is available may be detected, thus avoiding the problem that the urea concentration in the urea solution cannot be accurately measured due to the disability of the ultrasonic sensing element.

Further, in the step 3.2, the calculating the urea concentration in the urea solution by using the ultrasonic signal, comprises:

recording propagation time of the ultrasonic wave in the urea solution as Tr and a propagation distance of the ultrasonic wave as Ds, wherein the propagation time Tr is calculated by the signal processing unit according to the sent first excitation signal and the received ultrasonic signal, and a relationship between a value of the propagation time Tr and a propagation speed $Cs$ of the ultrasonic wave satisfies the following formula:

$$Cs=Ds/Tr \quad (1)$$

when the ultrasonic wave is propagated in the urea solution, the propagation speed $Cs$ is determined by a bulk modulus $K$ and a density $\rho$ of the urea solution:

$$Cs = \sqrt{\frac{K}{\rho}} \quad (2)$$

wherein, values of the bulk modulus $K$ and the density $\rho$ both change with changes of concentration and temperature of the urea solution; and
since the propagation distance Ds of the ultrasonic wave is a fixed value and the propagation speed $Cs$ of the ultrasonic wave is a function of the propagation time Tr of the ultrasonic wave, the urea concentration $\gamma_s$ in the urea solution is calculated according to the propagation time Tr of the ultrasonic wave and the temperature $Ts$ of the urea solution.

Further, in the step 3.3, the calculating the urea concentration in the urea solution by using the impedance sensing signal, comprises:

recording an impedance between the first electrode and the second electrode as $Zs$, wherein the impedance $Zs$ is calculated by the signal processing unit according to the impedance sensing signal, and is also a function of the temperature $Ts$ of the urea solution and the urea concentration $\gamma_s$ of the urea solution:

$$Zs = f(Ts, \gamma_s) \quad (3)$$

so that the urea concentration $\gamma_s$ in the urea solution is calculated by using the impedance $Zs$ and the temperature $Ts$ of the urea solution.

Further, in the step 3, when the impurity ion concentration in the urea solution is calculated, the ultrasonic sensing element is available, and the impurity ion concentration in the urea solution is calculated by using the impedance sensing signal, which comprises:

recording an impedance between the first electrode and the second electrode as $Zs$, wherein the impedance $Zs$ is calculated by the signal processing unit according to the impedance sensing signal, and calculating an impedance change value dZs of the impedance $Zs$, wherein the impedance change value dZs is defined as follows:

$$dZs = (Zs(\gamma i) - Zs(0))/Zs(0) \quad (5)$$

wherein, $Zs(\gamma i)$ is an impedance between the first electrode and the second electrode measured in a urea solution with an impurity ion concentration $\gamma i$, and Zs(0) is an impedance between the first electrode and the second electrode measured in a urea solution conforming to an ISO 22241 standard; and the impurity ion concentration $\gamma i$ is obtained through a lookup table:

$$\gamma i = Tbl(dZs).$$

In a tail gas processing system, the impurity ions will remain and accumulate in the SCR catalyst, thus reducing activity and denitrification efficiency of the catalyst, and even making the catalyst ineffective. When the impurity ions exist in the urea solution, the ultrasonic signal is insensitive to the impurity ions, and the impurity ion concentration cannot be detected; while the impedance sensing signal is sensitive to the impurity ions, and the high sensitivity of the impedance sensing element enables the impedance sensing element to detect low-concentration impurities in the urea solution.

Further, in the step 3.2, when the urea concentration in the urea solution is calculated by using the ultrasonic signal, the temperature $Ts$ of the urea solution is a function of a resistance Re of the first electrode, the resistance Re of the first electrode is measured by the signal processing unit, and the urea concentration $\gamma_s$ in the urea solution is obtained through a 2-D lookup table:

$$\gamma_s = Qu = Tbl(Re, Tr)$$

wherein, Qu represents that the urea concentration $\gamma_s$ in the urea solution is calculated by using the ultrasonic wave.

Further, in the step 3.2, when the urea concentration in the urea solution is calculated by using the ultrasonic signal, the temperature $Ts$ of the urea solution is measured by the first temperature sensing element, and the urea concentration $\gamma_s$ in the urea solution is obtained through a 2-D lookup table:

$$\gamma_s = Qu = Tbl(T135, Tr)$$

wherein, T135 represents the temperature of the urea solution measured by the first temperature sensing element, and Qu represents that the urea concentration $\gamma_s$ in the urea solution is calculated by using the ultrasonic wave.

Further, in the step 3.3, when the urea concentration in the urea solution is calculated by using the impedance sensing signal, the temperature $Ts$ of the urea solution is a function of a resistance Re of the first electrode, and the resistance Re of the first electrode is measured by the signal processing unit; and the impedance Zs is a function of the resistance Re of the first electrode and the urea concentration $\gamma_s$ in the urea solution:

$$Zs = g(Re, \gamma_s) \quad (4)$$

the urea concentration $\gamma_s$ in the urea solution is obtained through a 2-D lookup table:

$$\gamma_s = Qi = Tbl(Re, Zs)$$

wherein, Qi represents that the urea concentration $\gamma_s$ in the urea solution is calculated by using the impedance.

Further, in the step 3.3, when the urea concentration in the urea solution is calculated by using the impedance sensing signal, the temperature Ts of the urea solution is measured by the first temperature sensing element, and the urea concentration $\gamma_s$ in the urea solution is obtained through a 2-D lookup table:

$$\gamma_s = Qi = Tbl(T135, Zs)$$

wherein, T135 represents the temperature of the urea solution measured by the first temperature sensing element, and Qi represents that the urea concentration $\gamma_s$ in the urea solution is calculated by using the impedance.

In a third aspect, a fault detection method for a sensor for measuring quality of a urea solution is disclosed, which comprises the following steps of:

step 1: receiving a sensing signal sent by a quality sensing element by a signal processing unit, and judging whether an ultrasonic sensing element and an impedance sensing element are available; and
step 2: when the ultrasonic sensing element and the impedance sensing element are both available, calculating a urea concentration in the urea solution by using an ultrasonic wave and an impedance respectively, and judging whether the sensor has an IR fault according to a difference between the two urea concentrations.

Further, the step 1 comprises:

recording an amplitude value of an ultrasonic signal in the sensing signal as S_amp, comparing the amplitude value S_amp of the ultrasonic signal with a first threshold Thd_samp, and when the S_amp is not higher than the Thd_samp, judging the ultrasonic sensing element to be unavailable; and
when the S_amp is higher than the Thd_samp, obtaining a peak time shift T_sft of the ultrasonic signal by calculating a difference between peak time Tpk and a normal value Tpk0:

$$T\_sft = Tpk - Tpk0$$

comparing the peak time shift T_sft of the ultrasonic signal with a second threshold Thd_Tsft, and when the T_sft is not higher than the Thd_Tsft, judging the ultrasonic sensing element to be unavailable; and when the T_sft is higher than the Thd_Tsft, judging the ultrasonic sensing element to be available;
wherein, a judgment condition of availability of the impedance sensing element comprises detecting whether the impedance sensing signal exceeds a maximum or minimum boundary measurement value thereof: when the impedance sensing signal is greater than the maximum boundary measurement value or less than the minimum boundary measurement value, judging the impedance sensing element to be unavailable, and when the impedance sensing signal is not greater than the maximum boundary measurement value or not less than the minimum boundary measurement value, judging the impedance sensing element to be available.

Further, the step 2 comprises: recording the urea concentration in the urea solution calculated by using the ultrasonic wave as QU_conc and the urea concentration in the urea solution calculated by using the impedance as QI_conc, and calculating the difference DEF_Diff between the two urea concentrations:

$$DEF\_Diff = abs(QI\_conc - QU\_conc)$$

wherein, abs () refers to calculation of an absolute value, and when the value of the DEF_Diff is higher than a third threshold Thd_Ddiff, it is judged that the sensor has the IR fault and gives an alarm; and when the value of the DEF_Diff is not higher than the third threshold Thd_Ddiff, it is judged that the sensor has no IR fault.

Beneficial effects:

The present application provides the sensor capable of detecting the impurity ions and accurately measuring the urea concentration, and the sensor is insensitive to the state of urea solution, comprising being insensitive to the bubbles in the urea solution, thus avoiding the sensor from being ineffective under an action of the bubbles. The sensor is compact and low in cost.

In order to avoid the false alarm of the urea concentration triggered by a sensor problem, the fault detection method for the sensor provided by the present application can not only detect the so-called OOR (Out-Of-Range) problem that causes a reading value to exceed an effective range, but also diagnose the so-called IR (In-Range) problem that the sensor sensing value is within a normal range but inaccurate.

**BRIEF DESCRIPTION OF THE DRAWINGS**

The present invention is further described in detail hereinafter with reference to the drawings and specific embodiments, and the advantages of the above and/or other aspects of the present invention will be clearer.

FIG. 1 is a schematic structural diagram of a sensor for measuring quality of a urea solution provided by an embodiment of the present application.
FIG. 2 is a schematic structural diagram of a quality sensing element in the sensor for measuring the quality of the urea solution provided by the embodiment of the present application.
FIG. 3 is another schematic structural diagram of the quality sensing element in the sensor for measuring the quality of the urea solution provided by the embodiment of the present application.
FIG. 4 shows changing curves of a propagation time measured value of an ultrasonic wave and an impedance measured value obtained by using an ultrasonic sensing element and an impedance sensing element respectively in a method for measuring quality of a urea solution provided by an embodiment of the present application with an impurity ion concentration in the urea solution.
FIG. 5 is a signal diagram of a first excitation signal received by the ultrasonic sensing element and an ultrasonic signal generated in the method for measuring the quality of the urea solution provided by the embodiment of the present application.
FIG. 6 is a schematic structural diagram of a signal processing unit in the sensor for measuring the quality of the urea solution provided by the embodiment of the present application.
FIG. 7 is a flow chart of calculation of a urea concentration in the urea solution in the method for measuring the quality of the urea solution provided by the embodiment of the present application.
FIG. 8 is a flow chart of a fault detection method for a sensor for measuring quality of a urea solution provided by an embodiment of the present application.

**DETAILED DESCRIPTION**

Embodiments of the present invention are described hereinafter with reference to the drawings.

A sensor and method for measuring quality of a urea solution provided by the present application may be applied to a selective catalytic reduction scene, and when the urea solution is used as a diesel exhaust fluid (DEF), the sensor is used to measure the quality of the urea solution and detect a fault of the sensor itself.

First Embodiment of the present application discloses a sensor for measuring quality of a urea solution, which comprises a quality sensing element 100 and a signal processing unit 120, wherein the quality sensing element 100 is completely covered by the urea solution, and the signal processing unit 120 is electrically connected with the quality sensing element 100;

the quality sensing element 100 is configured for receiving an excitation signal generated by the signal processing unit 120, generating a sensing signal, and sending the sensing signal to the signal processing unit 120; and
the signal processing unit 120 is configured for generating the excitation signal, sending the excitation signal to the quality sensing element 100, receiving the sensing signal sent by the quality sensing element 100, and calculating a quality sensing value of the urea solution according to the sensing signal, and the quality sensing value of the urea solution comprises a urea concentration and an impurity ion concentration in the urea solution.

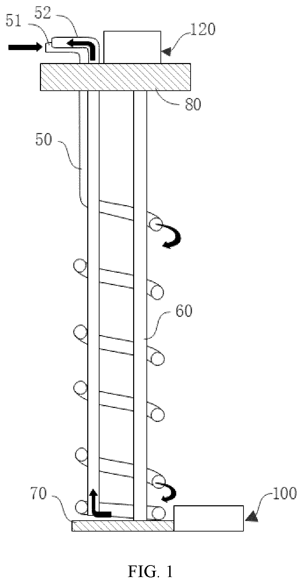

As shown in FIG. 1, during specific implementation, the sensor for measuring the quality of the urea solution may be provided with a rubber head 80 and a base 70, an engine coolant flows through a coolant pipe 50 with an inlet 51 and an outlet 52 via the rubber head 80 to heat a urea solution in a urea tank, the signal processing unit 120 may be arranged at a top portion of the rubber head 80 and connected to the base 70 through a cable pipe 60, and the quality sensing element 100 is connected with the base 70.

In the embodiment, the quality sensing element 100 comprises an impedance sensing element and an ultrasonic sensing element, the impedance sensing element comprises a first electrode 130 and a second electrode 125, a urea solution between the first electrode 130 and the second electrode 125 is communicated with a urea solution in the ultrasonic sensing element, and one end of the second electrode 125 is electrically connected to the signal processing unit 120 through a second signal line 123; one end of the first electrode 130 is electrically connected to the signal processing unit 120 through a first signal line 128; and the ultrasonic sensing element is electrically connected to the signal processing unit 120 through a fifth signal line 115, and is configured for generating an ultrasonic wave according to the excitation signal sent by the signal processing unit 120, transmitting and receiving the ultrasonic wave, and sending a received ultrasonic signal to the signal processing unit 120.

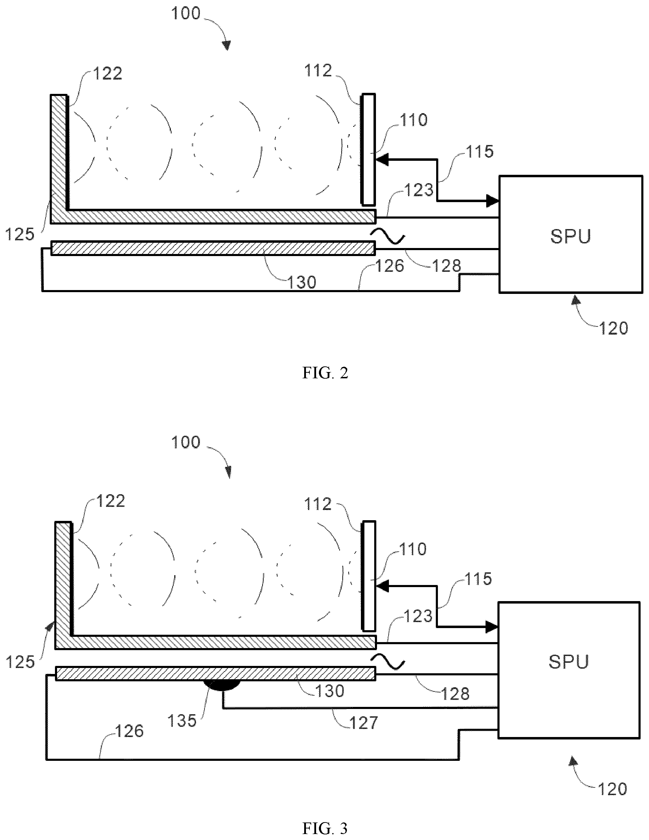

In an optional implementation mode, as shown in FIG. 2, impedances of the first electrode 130 and the second electrode 125 change with temperature, and specifically, the first electrode 130 and the second electrode 125 may be made of stainless steel (such as 304, 304L, 316 and 316L), Hastelloy (Ni-Mo-Cr-W alloy), and other materials.

The second electrode 125 comprises a horizontal part and a vertical part, and one end of the horizontal part far away from the vertical part is electrically connected to the signal processing unit 120 through the second signal line 123; and the first electrode 130 has no contact with the second electrode 125, the urea solution exists between the first electrode 130 and the horizontal part of the second electrode 125, and one end of the first electrode 130 far away from the vertical part of the second electrode 125 is electrically connected to the signal processing unit 120 through the first signal line 128.

Optionally, the ultrasonic sensing element comprises an ultrasonic transceiving unit 112, the ultrasonic transceiving unit 112 comprises an ultrasonic transmitter and a receiver, the transmitter and the receiver are parallel, the urea solution exists between the transmitter and the receiver, the urea solution is communicated with the urea solution between the first electrode 130 and the horizontal part of the second electrode 125, and the transmitter and the receiver are both electrically connected to the signal processing unit 120. Illustratively, a mounting plane 110 is arranged above one end of the horizontal part of the second electrode 125 far away from the vertical part, the ultrasonic transmitter is tightly attached to the mounting plane 110, and the receiver is tightly attached to the vertical part of the second electrode 125.

Optionally, the ultrasonic sensing element comprises the ultrasonic transceiving unit 112 and a reflector 122, the ultrasonic transceiving unit 112 and the reflector 122 are parallel, the urea solution exists between the ultrasonic transceiving unit and the reflector, and the urea solution is communicated with the urea solution between the first electrode 130 and the horizontal part of the second electrode 125. Illustratively, the ultrasonic transceiving unit 112 may be located above one end of the horizontal part of the second electrode 125 far away from the vertical part, and the reflector 122 is tightly attached to the vertical part of the second electrode 125; or, illustratively, the vertical part of the second electrode 125 is directly used as the reflector 122. The ultrasonic transceiving unit 112 is configured for transmitting an ultrasonic wave and receiving an ultrasonic echo signal reflected by the reflector 122. Optionally, the ultrasonic transceiving unit 112 comprises an ultrasonic transducer and receiver (TR); and the ultrasonic transceiving unit 112 is electrically connected to the signal processing unit 120 through the fifth signal line 115.

In other implementation mode, the second electrode 125 may also be designed in other shapes, such as the same shape as the first electrode 130, and is placed in parallel with the first electrode 130. When the ultrasonic sensing element only comprises the ultrasonic transceiving unit 112, and the ultrasonic transceiving unit 112 comprises the ultrasonic transmitter and receiver, the ultrasonic transmitter may be tightly attached to an inner side of one of the first electrode 130 and the second electrode 125, and the receiver is tightly attached to an inner side of the other electrode, wherein the inner sides refer to parallel and opposite parts of the first electrode 130 and the second electrode 125; and when the ultrasonic sensing element comprises the ultrasonic transceiving unit 112 and the reflector 122, the ultrasonic transceiving unit 112 may be tightly attached to the inner side of one of the first electrode 130 and the second electrode 125, and the reflector 122 is tightly attached to the inner side of the other electrode. Illustratively, the inner side of the other electrode may be directly used as the reflector 122.

In the above implementation modes, the second electrode 125 is designed to be L-shaped, or the second electrode 125 and the first electrode 130 are parallel, and the impedance sensing elements all can be shared by the ultrasonic sensing element, so that the quality sensing element 100 is compact in design and low in cost.

In still other implementation modes, regardless of the sharing of the impedance sensing element and the ultrasonic sensing element, as long as it is ensured that the urea solution between the first electrode 130 and the second electrode 125 is communicated with the urea solution in the ultrasonic sensing element, a positional relationship between the impedance sensing element and the ultrasonic sensing element may not be limited.

In another optional implementation mode, as shown in FIG. 3, the impedance of the first electrode 130 does not change with temperature, and structure and connection relationships between the impedance sensing element and the ultrasonic sensing element are similar to those of the above optional implementation mode. The impedance sensing element further comprises a first temperature sensing element 135, and the first temperature sensing element 135 is configured for measuring a temperature of the urea solution between the first electrode 130 and the second electrode 125, and is electrically connected with the signal processing unit 120 through an eighth signal line 127. Illustratively, the first temperature sensing element 135 may be placed next to the first electrode 130.

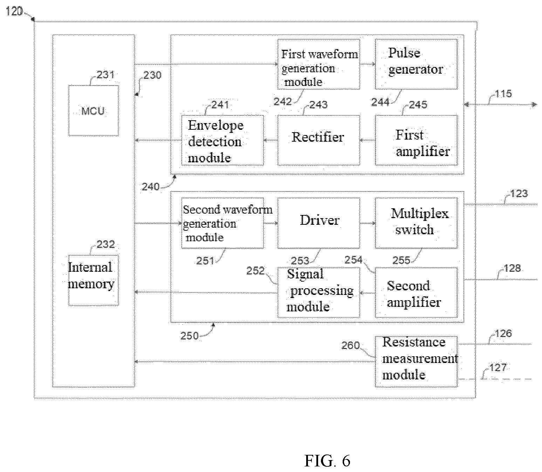

In the embodiment, as shown in FIG. 6, the signal processing unit 120 comprises a central processing unit 230 (CPU), an ultrasonic signal processing sub unit 240 (USPSU) and an impedance signal processing sub unit 250 (ISPSU).

The central processing unit 230 comprises an MCU 231 (microcontroller unit) and a memory 232, and is configured for sending commands to the ultrasonic signal processing sub unit 240 and the impedance signal processing sub unit 250, receiving the sensing signal processed by the ultrasonic signal processing sub unit 240 and the impedance signal processing sub unit 250, and calculating the quality sensing value of the urea solution according to the sensing signal.

The ultrasonic signal processing sub unit 240 is electrically connected with the ultrasonic sensing element through the fifth signal line 115, and is configured for receiving a first command sent by the central processing unit 230, generating a first excitation signal, sending the first excitation signal to the ultrasonic sensing element, receiving the ultrasonic signal sent by the ultrasonic sensing element, processing the ultrasonic signal, and then sending the ultrasonic signal to the central processing unit 230.

The ultrasonic signal processing sub unit 240 comprises a first waveform generation module 242 (WGM), a pulse generator module 244 (PM), a first amplifier 245, a rectifier 243 and an envelope detection module 241 (EDM), and the central processing unit 230 generates a first command and sends the first command to the first waveform generation module 242; the first waveform generation module 242 generates a pulse signal according to these commands and sends the pulse signal to the pulse generator module 244; and the pulse generator module 244 generates the first excitation signal according to the pulse signal and sends the first excitation signal to the ultrasonic transceiving unit 112 through the fifth signal line 115.

The ultrasonic transceiving unit 112 generates the ultrasonic wave according to the first excitation signal, and sends the ultrasonic signal to the first amplifier 245.

The first amplifier 245 amplifies the ultrasonic signal, and sends the amplified ultrasonic signal to the rectifier 243; the rectifier 243 eliminates a negative voltage signal, and then sends the signal to the envelope detection module 241; and the envelope detection module 241 filters out a high-frequency carrier signal, and sends a pulse envelope signal to the central processing unit 230.

The impedance signal processing sub unit 250 is electrically connected with one end of the first electrode 130 through the first signal line 128 and electrically connected with one end of the second electrode 125 through the second signal line 123, and is configured for receiving a second command sent by the central processing unit 230, generating a second excitation signal, sending the second excitation signal to the first electrode 130 and the second electrode 125 respectively, receiving an impedance sensing signal sent by the first electrode 130, processing the impedance sensing signal, and then sending the impedance sensing signal to the central processing unit 230.

The impedance signal processing sub unit 250 comprises a second waveform generation module 251, a driver 253, a multiplex switch 255 (MUX), a second amplifier 254 and a signal processing module 252 (SPM). The central processing unit 230 generates the second command, and sends the second command to the second waveform generation module 251; the second waveform generation module 251 generates an excitation signal (sinusoidal single-frequency excitation signal or sweep-frequency excitation signal) with a set frequency or frequency band according to the second command, and sends the excitation signal to the driver 253; the driver 253 generates a power excitation signal, and sends the power excitation signal to the multiplex switch 255; and the multiplex switch 255 selectively sends the power excitation signal to the first electrode 130 through the first signal line 128 or to the second electrode 125 through the second signal line 123 according to a set command sent by the MCU.

The first electrode 130 sends the impedance sensing signal to the second amplifier 254 through the first signal line 128; the second amplifier 254 amplifies the impedance sensing signal, and sends the amplified impedance sensing signal to the signal processing module 252; and the signal processing module 252 processes the amplified impedance sensing signal, and sends the processed signal to the central processing unit 230.

In an optional implementation mode, the signal processing unit 120 further comprises a resistance measurement module 260 (RMM), and the resistance measurement module 260 is electrically connected with the other end of the first electrode 130 through a sixth signal line 126, and is configured for measuring a resistance of the first electrode 130, and sending the resistance value to the central processing unit 230.

In another optional implementation mode, the signal processing unit 120 further comprises the resistance measurement module 260, the first temperature sensing element 135 is electrically connected with the resistance measurement module 260 through the eighth signal line 127, and the resistance measurement module 260 is configured for measuring a resistance of the first temperature sensing element 135, and sending the resistance value to the central processing unit 230.

Second Embodiment of the present application discloses a method for measuring quality of a urea solution, which comprises the following steps of:

step 1: sending an excitation signal to a quality sensing element 100 by a signal processing unit 120, wherein the excitation signal comprises a first excitation signal sent to an ultrasonic sensing element and a second excitation signal sent to a first electrode 130 and a second electrode 125;

step 2: receiving the excitation signal generated by the signal processing unit 120, generating a sensing signal, and sending the sensing signal to the signal processing unit 120 by the quality sensing element 100, wherein the sensing signal comprises an ultrasonic signal and an impedance sensing signal; and

step 3: receiving the sensing signal sent by the quality sensing element 100, and calculating a quality sensing value of the urea solution according to the sensing signal by the signal processing unit 120, wherein the calculating the quality sensing value of the urea solution comprises calculating a urea concentration in the urea solution and calculating an impurity ion concentration in the urea solution.

In an optional implementation mode, the step 2 comprises: receiving the first excitation signal by an ultrasonic transmitter in an ultrasonic transceiving unit 112, generating an ultrasonic wave, and sending the ultrasonic signal to a receiver; sending the received ultrasonic signal to the signal processing unit 120 by the receiver; and sending the impedance sensing signal to the signal processing unit 120 by the first electrode 130.

In another optional implementation mode, the step 2 comprises: receiving the first excitation signal by the ultrasonic transceiving unit 112, and generating the ultrasonic wave; allowing the ultrasonic wave to pass through a urea solution between the ultrasonic transceiving unit 112 and a vertical part of the second electrode 125, reflecting the ultrasonic wave at the vertical part of the second electrode 125 to generate an ultrasonic echo signal, and then transmitting the ultrasonic echo signal back to the ultrasonic transceiving unit 112; and sending the ultrasonic echo signal to the signal processing unit 120 by the ultrasonic transceiving unit 112, wherein the sensing signal in the step 2 comprises the ultrasonic signal and the ultrasonic signal in the impedance sensing signal, which is namely the ultrasonic echo signal. The first electrode 130 sends the impedance sensing signal to the signal processing unit 120.

In the embodiment, in the step 3, the calculating the urea concentration in the urea solution, comprises:

step 3.1: judging whether the ultrasonic sensing element is available;

step 3.2: when the ultrasonic sensing element is available, calculating the urea concentration in the urea solution by using the ultrasonic signal; and

step 3.3: when the ultrasonic sensing element is unavailable, calculating the urea concentration in the urea solution by using the impedance sensing signal.

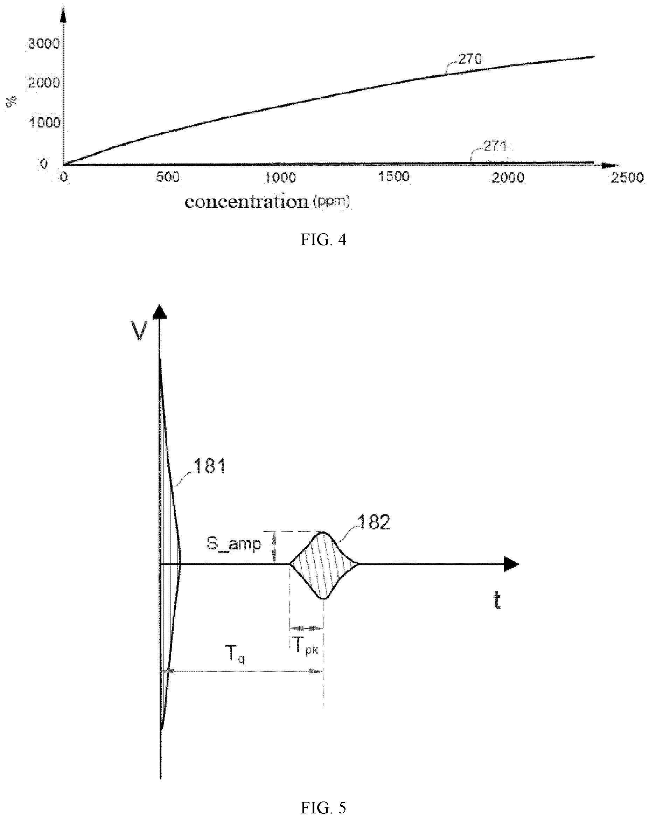

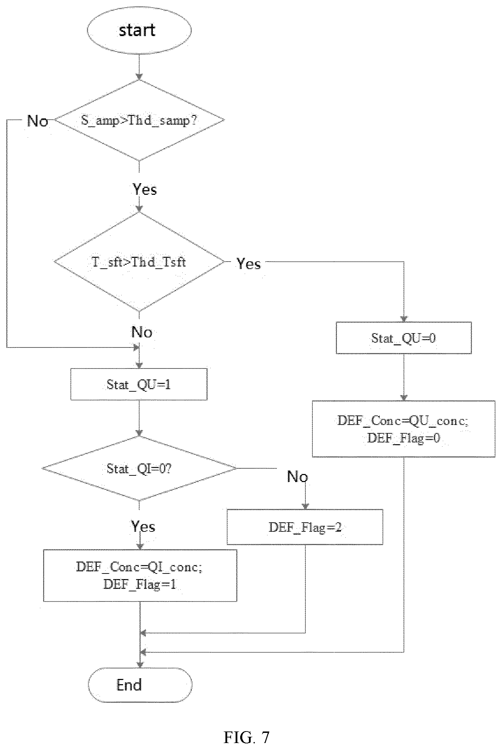

As shown in FIG. 5 and FIG. 7, according to the first excitation signal 181 and the ultrasonic signal 182 in the sensing signal, the step 3.1 comprises: recording an amplitude value of the ultrasonic signal in the sensing signal as S_amp, comparing the amplitude value S_amp of the ultrasonic signal with a first threshold Thd_samp, and when the S_amp is not higher than the Thd_samp, judging the ultrasonic sensing element to be unavailable, which is expressed by a state flag Stat_QU=1, wherein the first threshold Thd_samp may be set to be slightly higher than a maximum value of the S_amp in a working temperature range (such as -11°C to -85°C);

when the S_amp is higher than the Thd_samp, obtaining a peak time shift T_sft of the ultrasonic signal by calculating a difference between peak time Tpk and a normal value Tpk0: T_sft=Tpk-Tpk0, wherein the normal value Tpk0 is determined by a pulse width of the ultrasonic excitation signal, which may be set to be a half of pulse width value of the excitation signal;

comparing the peak time shift T_sft of the ultrasonic signal with a second threshold Thd_Tsft, and when the T_sft is not higher than the Thd_Tsft, judging the ultrasonic sensing element to be unavailable, which is expressed by the state flag Stat_QU=1; and when the T_sft is higher than the Thd_Tsft, judging the ultrasonic sensing element to be available, which is expressed by a state flag Stat_QU=0, wherein the second threshold Thd_Tsft may be set to be a width of one or several carrier pulses.

In the step 3.2, the calculating the urea concentration in the urea solution by using the ultrasonic signal, comprises:
recording propagation time of the ultrasonic wave in the urea solution as Tr and a propagation distance of the ultrasonic wave as Ds, wherein the propagation time Tr is calculated by the signal processing unit 120 according to the sent first excitation signal and the received ultrasonic signal.

In an optional implementation mode, the propagation distance Ds of the ultrasonic wave is a distance between the ultrasonic transmitter and receiver in the ultrasonic transceiving unit 112, and the propagation time Tr is calculated as a time interval between the first excitation signal obtained by the ultrasonic transmitter and the ultrasonic signal received by the receiver.

In another optional implementation mode, the propagation distance Ds of the ultrasonic wave is twice a distance between the ultrasonic transceiving unit 112 and the reflector 122, and the propagation time Tr is calculated as a time interval between the first excitation signal obtained by the ultrasonic transceiving unit 112 and the received ultrasonic echo signal generated by the ultrasonic reflector.

A relationship between a value of the propagation time Tr and a propagation speed Cs of the ultrasonic wave satisfies the following formula:

$$Cs = Ds/Tr \quad (1)$$

when the ultrasonic wave is propagated in the urea solution, the propagation speed $Cs$ is determined by a bulk modulus $K$ and a density $\rho$ of the urea solution:

$$Cs = \sqrt{\frac{K}{\rho}} \quad (2)$$

wherein, values of the bulk modulus $K$ and the density $\rho$ both change with changes of concentration and temperature of the urea solution; and since the propagation distance Ds of the ultrasonic wave is a fixed value and the propagation speed $Cs$ of the ultrasonic wave is a function of the propagation time Tr of the ultrasonic wave, the urea concentration $\gamma_s$ in the urea solution is calculated according to the propagation time Tr of the ultrasonic wave and the temperature $Ts$ of the urea solution.

In the step 3.3, the calculating the urea concentration in the urea solution by using the impedance sensing signal, comprises:

recording an impedance between the first electrode 130 and the second electrode 125 as $Zs$, wherein the impedance $Zs$ is calculated by the signal processing unit 120 according to the impedance sensing signal, and is also a function of the temperature $Ts$ of the urea solution and the urea concentration $\gamma_s$ of the urea solution:

$$Zs = f(Ts, \gamma_s) \quad (3)$$

so that the urea concentration $\gamma_s$ in the urea solution is calculated by using the impedance $Zs$ and the temperature $Ts$ of the urea solution.

In an optional implementation mode, the impedance of the first electrode 130 changes with temperature, and in the step 3.2, when the urea concentration in the urea solution is calculated by using the ultrasonic signal, the temperature $Ts$ of the urea solution is a function of a resistance Re of the first electrode 130, the resistance Re of the first electrode 130 is measured by the signal processing unit 120, and the urea concentration $\gamma_s$ in the urea solution is obtained through a 2-D lookup table:

$$\gamma_s = Qu = Tbl(Re, Tr)$$

wherein, Qu represents that the urea concentration $\gamma_s$ in the urea solution is calculated by using the ultrasonic wave.

In the step 3.3, when the urea concentration in the urea solution is calculated by using the impedance sensing signal, the temperature $Ts$ of the urea solution is a function of a resistance Re of the first electrode 130, and the resistance Re of the first electrode 130 is measured by the signal processing unit 120; and the impedance $Zs$ is a function of the resistance Re of the first electrode 130 and the urea concentration $\gamma_s$ in the urea solution:

$$Zs = g(Re, \gamma_s) \quad (4)$$

the urea concentration $\gamma_s$ in the urea solution is obtained through a 2-D lookup table:

$$\gamma_s = Qi = Tbl(Re, Zs)$$

wherein, Qi represents that the urea concentration $\gamma_s$ in the urea solution is calculated by using the impedance.

In an optional implementation mode, the impedance of the first electrode 130 does not change with temperature, the impedance sensing element further comprises the first temperature sensing element 135, and in the step 3.2, when the urea concentration in the urea solution is calculated by using the ultrasonic signal, the temperature Ts of the urea solution is measured by the first temperature sensing element 135, and the urea concentration $\gamma_s$ in the urea solution is obtained through a 2-D lookup table:

$$\gamma_s = Qu = Tbl(T135, Tr)$$

wherein, T135 represents the temperature of the urea solution measured by the first temperature sensing element 135, which is calculated by the signal processing unit 120 by obtaining the resistance of the first temperature sensing element 135, and Qu represents that the

urea concentration $\gamma_s$ in the urea solution is calculated by using the ultrasonic wave.

In the step 3.3, when the urea concentration in the urea solution is calculated by using the impedance sensing signal, the urea concentration $\gamma_s$ in the urea solution is obtained through a 2-D lookup table:

$$\gamma_s = Qi = Tbl(T135, Zs)$$

wherein, T135 represents the temperature of the urea solution measured by the first temperature sensing element 135, and Qi represents that the urea concentration $\gamma_s$ in the urea solution is calculated by using the impedance.

In the embodiment, in the step 3, when the impurity ion concentration in the urea solution is calculated, the ultrasonic sensing element is available, and the impurity ion concentration in the urea solution is calculated by using the impedance sensing signal, which comprises:

recording an impedance between the first electrode 130 and the second electrode 125 as $Zs$, wherein the impedance $Zs$ is calculated by the signal processing unit 120 according to the impedance sensing signal, and calculating an impedance change value dZs of the impedance $Zs$, wherein the impedance change value dZs is defined as follows:

$$dZs = (Zs(\gamma i) - Zs(0))/Zs(0) \quad (5)$$

wherein, Zs(yi) is an impedance between the first electrode 130 and the second electrode 125 measured in a urea solution with an impurity ion concentration $\gamma i$, and Zs(0) is an impedance between the first electrode 130 and the second electrode 125 measured in a urea solution conforming to an ISO 22241 standard; and the impurity ion concentration $\gamma i$ is obtained through a lookup table:

$$\gamma i = Tbl(dZs).$$

As shown in FIG. 4, a first curve 270 is a change of the impedance value Zs measured in the urea solution after adding calcium chloride ($CaCl_2$) impurities, and a second curve 271 is a change of the propagation time Tr of the ultrasonic wave obtained from the ultrasonic sensing element. As shown in the first curve 270 and the second curve 271, the impedance sensing signal is more sensitive to the ion impurity concentration in the urea solution than the ultrasonic signal. The high sensitivity of the impedance sensing element enables the impedance sensing element to detect low-concentration impurities in the urea solution. In a tail gas processing system, the impurity ions will remain and accumulate in the SCR catalyst, thus reducing activity and denitrification efficiency of the catalyst, and even making the catalyst ineffective. This is why the standard ISO22241 limits the impurity ions to a very low level. In fact, there are two problems in a substandard urea solution, one is an error of the urea concentration, which may lead to substandard emission, and the other is a problem of the impurity ions that will damage the SCR. An OBD (On-Board Diagnostics) standard only requires the detection of the first problem, that is, the error of the urea concentration leading to the emission problem, but if the concentration of the urea solution is within an allowable range, the OBD does not require the detection of the impurity ion concentration.

Because an influence of the impurity ions on the SCR is a long-term effect, that is, the accumulation of the impurity ions rather than the current concentration leads to the deterioration of the SCR, the lack of direct detection of the ion impurities (detection of an emission consequence caused by the impurity ions rather than the impurity ions themselves) will lead to that the SCR has been irreversibly disabled when the influence of the impurity ions is detected, and an SCR system manufacturer may face a serious warranty problem. The urea solution containing the impurity ions is not uncommon, because purification is an expensive step when manufacturing the urea solution, while extra costs are needed to transport and store the solution to meet the requirements stipulated in ISO22241. Some alternative methods, such as using a low-purity solvent (such as tap water) and carrying out a substandard operation (such as using a contaminated container), can significantly reduce the cost, but a lot of impurity ions may be introduced. In order to reduce quality claims, it is necessary to directly detect the impurity ion concentration.

In the present invention, as shown in FIG. 2 and FIG. 3, the quality sensing unit not only detects the urea concentration in the urea solution, but also detects the impurity ion concentration: the ultrasonic signal obtained from the ultrasonic sensing element is used to detect the urea concentration in the urea solution to avoid the emission problem caused by the low urea concentration, and meanwhile, the impedance sensing signal generated by the first electrode 130 and the second electrode 125 is used to further detect the impurity ion concentration in the urea solution. Because the current OBD does not require the detection of the impurity ion concentration, the measured impurity ion concentration may be recorded in the signal processing unit 120 as a basis for future claims.

Third Embodiment of the present application discloses a fault detection method for a sensor for measuring quality of a urea solution, which comprises the following steps.

In step 1, a sensing signal sent by a quality sensing element 100 is received by a signal processing unit 120, and whether an ultrasonic sensing element and an impedance sensing element are available is judged.

As shown in FIG. 5 and FIG. 7, the step 1 comprises:

recording an amplitude value of the ultrasonic signal in the sensing signal as S_amp, comparing the amplitude value S_amp of the ultrasonic signal with a first threshold Thd_samp, and when the S_amp is not higher than the Thd_samp, judging the ultrasonic sensing element to be unavailable, which is expressed by a state flag Stat_QU=1, indicating that the urea concentration QU_conc in the urea solution calculated by using the ultrasonic wave is not available; and

when the S_amp is higher than the Thd_samp, obtaining a peak time shift T_sft of the ultrasonic signal by calculating a difference between peak time Tpk and a normal value Tpk0:

$$T\_sft = Tpk - Tpk0$$

comparing the peak time shift T_sft of the ultrasonic signal with a second threshold Thd_Tsft, and when the T_sft is not higher than the Thd_Tsft, judging the ultrasonic sensing element to be unavailable, which is expressed by the state flag Stat_QU=1; and when the T_sft is higher than the Thd_Tsft, judging the ultrasonic sensing element to be available, which is expressed by a state flag Stat_QU=0, indicating that the urea concentration QU_conc in the urea solution calculated by using the ultrasonic wave is available; then setting a DEF report value DEF_conc value as QU_conc, and setting a DEF sensing flag DEF_flag to be 0, which means that the DEF concentration value is the ultrasonic sensing value; and ending the routine.

A judgment condition of availability of the impedance sensing element comprises detecting whether the impedance sensing signal exceeds a maximum or minimum boundary measurement value thereof: when the impedance sensing signal is greater than the maximum boundary measurement value (such as a signal value measured when a circuit is broken) or less than the minimum boundary measurement value (such as a signal value measured during short circuit), judging the impedance sensing element to be unavailable, which is expressed by a state flag Stat_QI=1, and when the impedance sensing signal is not greater than the maximum boundary measurement value or not less than the minimum boundary measurement value, judging the impedance sensing element to be available, which is expressed by a state flag Stat_QI=0. In the case of the state flag Stat_QI=0, the urea concentration QI_conc in the urea solution calculated by using the impedance is available, then the DEF report value DEF_conc is set as the urea concentration QI_conc in the urea solution calculated by using the impedance, and meanwhile, the DEF sensing flag DEF_flag is set to be 1, which means that the DEF concentration sensing value is the impedance sensing value, and the routine is ended; and in the case of the state flag Stat_QI=1, the DEF sensing flag DEF_flag is set to be 2, which means that all DEF concentration sensing values are unavailable, and the routine is ended.

In step 2, when the ultrasonic sensing element and the impedance sensing element are both available, a urea concentration in the urea solution is calculated by using an ultrasonic wave and an impedance respectively, and whether the sensor has an IR fault is judged according to a difference between the two urea concentrations.

The step 2 comprises: recording the urea concentration in the urea solution calculated by using the ultrasonic wave as QU_conc and the urea concentration in the urea solution calculated by using the impedance as QI_conc, and calculating the difference DEF_Diff between the two urea concentrations:

$$DEF\_Diff = abs(QI\_conc - QU\_conc)$$

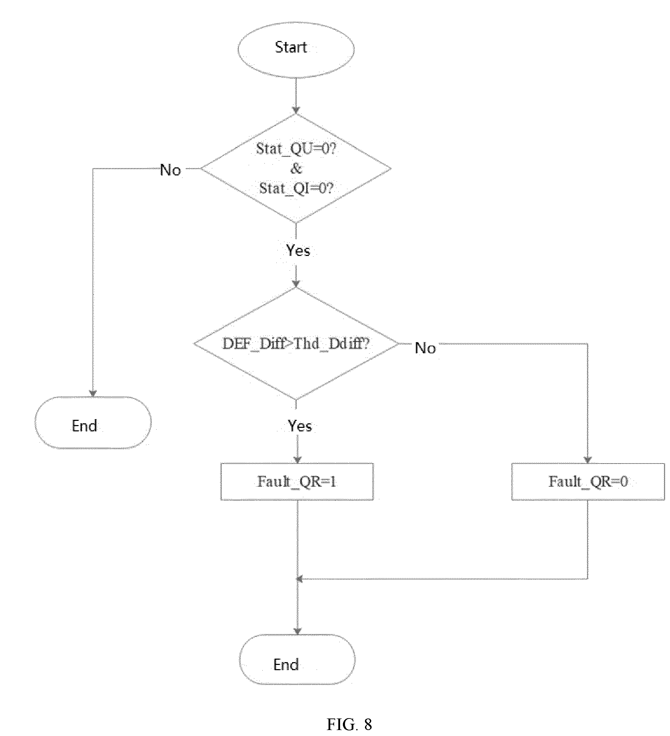

wherein, abs () refers to calculation of an absolute value, and as shown in FIG. 8, when the value of the DEF_Diff is higher than a third threshold Thd_Ddiff, it is judged that the sensor has the IR fault and gives an alarm, which is expressed by a fault flag Fault_QR=1; and when the value of the DEF_Diff is not higher than the third threshold Thd_Ddiff, it is judged that the sensor has no IR fault, which is expressed by a fault flag Fault_QR=0.

In specific implementation, the present application provides a computer storage medium and a corresponding data processing unit, wherein the computer storage medium is capable of storing a computer program, and the computer program, when executed by the data processing unit, can run the inventive contents of the method for measuring the quality of the urea solution and the fault detection method for the sensor for measuring the quality of the urea solution provided by the present invention, and some or all steps in various embodiments. The storage medium may be a magnetic disk, an optical disk, a Read Only Storage (ROM) or a Random Access Storage (RAM), and the like.

Those skilled in the art can clearly understand that the technical solutions in the embodiments of the present invention can be realized by means of a computer program and a corresponding general hardware platform thereof. Based on such understanding, the essence of the technical solutions in the embodiments of the present invention or the part contributing to the prior art, may be embodied in the form of a computer program, i.e., a software product. The computer program, i.e., the software product is stored in a storage medium comprising a number of instructions such that a device (which may be a personal computer, a server, a singlechip, a MUU or a network device, and the like) comprising the data processing unit executes the methods described in various embodiments or some parts of the embodiments of the present invention.

The present invention provides the sensor and method for measuring the quality of the urea solution, with many methods and ways to realize the technical solution specifically. Those described above are merely the specific embodiments of the present invention, and it should be pointed out that those of ordinary skills in the art may further make improvements and decorations without departing from the principle of the present invention, and these improvements and decorations should also be regarded as the scope of protection of the present invention. All the unspecified components in the embodiments can be realized by the prior art.

**Claims**

1. A sensor for measuring quality of a urea solution, comprising a quality sensing element (100) and a signal processing unit (120), wherein the quality sensing element (100) is completely covered by the urea solution, and the signal processing unit (120) is electrically connected with the quality sensing element (100);

   the quality sensing element (100) is configured for receiving an excitation signal generated by the signal processing unit (120), generating a sensing signal, and sending the sensing signal to the signal processing unit (120); and
   the signal processing unit (120) is configured for generating the excitation signal, sending the excitation signal to the quality sensing element (100), receiving the sensing signal sent by the quality sensing element (100), and calculating a quality sensing value of the urea solution according to the sensing signal, and the quality sensing value of the urea solution comprises a urea concentration and an impurity ion concentration in the urea solution.

2. The sensor for measuring the quality of the urea solution according to claim 1, wherein the quality sensing element (100) comprises an impedance sensing element and an ultrasonic sensing element, the impedance sensing element comprises a first electrode (130) and a second electrode (125), a urea solution between the first electrode (130) and the second electrode (125) is communicated with a urea solution in the ultrasonic sensing element, and one end of the second electrode (125) is electrically connected to the signal processing unit (120) through a second signal line (123); one end of the first electrode (130) is electrically connected to the signal processing unit (120) through a first signal line (128); and the ultrasonic sensing element is electrically connected to the signal processing unit (120) through a fifth signal line (115), and is configured for generating an ultrasonic wave according to the excitation signal sent by the signal processing unit (120), transmitting and receiving the ultrasonic wave, and sending a received ultrasonic signal to the signal processing unit (120).

3. The sensor for measuring the quality of the urea solution according to claim 2, wherein the signal processing unit (120) comprises a central processing unit (230), an ultrasonic signal processing sub unit (240) and an impedance signal processing sub unit (250), and

   the central processing unit (230) is configured for sending commands to the ultrasonic signal processing sub unit (240) and the impedance signal processing sub unit (250), receiving the sensing signal processed by the ultrasonic signal processing sub unit (240) and the impedance signal processing sub unit (250), and calculating the quality sensing value of the urea solution according to the sensing signal;
   the ultrasonic signal processing sub unit (240) is electrically connected with the ultrasonic sensing element through the fifth signal line (115), and is configured for receiving a first command sent by the central processing unit (230), generating a first excitation signal, sending the first excitation signal to the ultrasonic sensing element, receiving the ultrasonic signal sent by the ultrasonic sensing element, processing the ultrasonic signal, and then sending the ultrasonic signal to the central processing unit (230); and
   the impedance signal processing sub unit (250) is electrically connected with one end of the first electrode (130) through the first signal line (128) and electrically connected with one end of the second electrode (125) through the second signal line (123), and is configured for receiving a second command sent by the central processing unit (230), generating a second excitation signal, sending the second excitation signal to the first electrode (130) and the second electrode (125) respectively, receiving an impedance sensing signal sent by the first electrode (130), processing the impedance sensing signal, and then sending the impedance sensing signal to the central processing unit (230).

4. The sensor for measuring the quality of the urea solution according to claim 3, wherein the signal processing unit (120) further comprises a resistance measurement module (260), and the resistance measurement module (260) is electrically connected with the other end of the first electrode (130) through a sixth signal line (126), and is configured for measuring a resistance of the first electrode (130), and sending the resistance value to the central processing unit (230).

**5.** The sensor for measuring the quality of the urea solution according to claim 3, wherein the signal processing unit (120) further comprises a resistance measurement module (260), the impedance sensing element further comprises a first temperature sensing element (135), the first temperature sensing element (135) is configured for measuring a temperature of the urea solution between the first electrode (130) and the second electrode (125), and is electrically connected with the resistance measurement module (260) through an eighth signal line (127), and the resistance measurement module (260) is configured for measuring a resistance value of the first temperature sensing element (135), and sending the resistance value to the central processing unit (230).

**6.** A method for measuring quality of a urea solution, comprising the following steps of:

step 1: sending an excitation signal to a quality sensing element (100) by a signal processing unit (120), wherein the excitation signal comprises a first excitation signal sent to an ultrasonic sensing element and a second excitation signal sent to a first electrode (130) and a second electrode (125);

step 2: receiving the excitation signal generated by the signal processing unit (120), generating a sensing signal, and sending the sensing signal to the signal processing unit (120) by the quality sensing element (100), wherein the sensing signal comprises an ultrasonic signal and an impedance sensing signal; and

step 3: receiving the sensing signal sent by the quality sensing element (100), and calculating a quality sensing value of the urea solution according to the sensing signal by the signal processing unit (120), wherein the calculating the quality sensing value of the urea solution comprises calculating a urea concentration in the urea solution and calculating an impurity ion concentration in the urea solution.

**7.** The method for measuring the quality of the urea solution according to claim 6, wherein, in the step 3, the calculating the urea concentration in the urea solution, comprises:

step 3.1: judging whether the ultrasonic sensing element is available;

step 3.2: when the ultrasonic sensing element is available, calculating the urea concentration in the urea solution by using the ultrasonic signal; and

step 3.3: when the ultrasonic sensing element is unavailable, calculating the urea concentration in the urea solution by using the impedance sensing signal.

**8.** The method for measuring the quality of the urea solution according to claim 7, wherein, the step 3.1 comprises: recording an amplitude value of the ultrasonic signal in the sensing signal as S_amp, comparing the amplitude value S_amp of the ultrasonic signal with a first threshold Thd_samp, and when the S_amp is not higher than the Thd_samp, judging the ultrasonic sensing element to be unavailable; and

when the S_amp is higher than the Thd_samp, obtaining a peak time shift T_sft of the ultrasonic signal by calculating a difference between peak time Tpk and a normal value Tpk0:

$$T\_sft = Tpk\text{-}Tpk0;$$

and
comparing the peak time shift T_sft of the ultrasonic signal with a second threshold Thd_Tsft, and when the T_sft is not higher than the Thd_Tsft, judging the ultrasonic sensing element to be unavailable; and when the T_sft is higher than the Thd_Tsft, judging the ultrasonic sensing element to be available.

**9.** The method for measuring the quality of the urea solution according to claim 7, wherein, in the step 3.2, the calculating the urea concentration in the urea solution by using the ultrasonic signal, comprises:

recording propagation time of the ultrasonic wave in the urea solution as Tr and a propagation distance of the ultrasonic wave as Ds, wherein the propagation time Tr is calculated by the signal processing unit (120) according to the sent first excitation signal and the received ultrasonic signal, and a relationship between a value of the propagation time Tr and a propagation speed *Cs* of the ultrasonic wave satisfies the following formula:

$$Cs = Ds/Tr \quad (1)$$

when the ultrasonic wave is propagated in the urea solution, the propagation speed Cs is determined by a bulk modulus *K* and a density $\rho$ of the urea solution:

$$Cs = \sqrt{\frac{K}{\rho}} \quad (2)$$

wherein, values of the bulk modulus *K* and the density $\rho$ both change with changes of concentration and temperature of the urea solution; and

since the propagation distance Ds of the ultrasonic wave is a fixed value and the propagation speed $Cs$ of the ultrasonic wave is a function of the propagation time Tr of the ultrasonic wave, the urea concentration $\gamma_s$ in the urea solution is calculated according to the propagation time Tr of the ultrasonic wave and the temperature $Ts$ of the urea solution.

10. The method for measuring the quality of the urea solution according to claim 7, wherein, in the step 3.3, the calculating the urea concentration in the urea solution by using the impedance sensing signal, comprises:

recording an impedance between the first electrode (130) and the second electrode (125) as $Zs$, wherein the impedance $Zs$ is calculated by the signal processing unit (120) according to the impedance sensing signal, and is also a function of the temperature $Ts$ of the urea solution and the urea concentration $\gamma_s$ in the urea solution:

$$Zs = f(Ts, \gamma_s) \quad (3)$$

so that the urea concentration $\gamma_s$ in the urea solution is calculated by using the impedance $Zs$ and the temperature $Ts$ of the urea solution.

11. The method for measuring the quality of the urea solution according to claim 9, wherein, in the step 3, when the impurity ion concentration in the urea solution is calculated, the ultrasonic sensing element is available, and the impurity ion concentration in the urea solution is calculated by using the impedance sensing signal, which comprises:

recording an impedance between the first electrode (130) and the second electrode (125) as $Zs$, wherein the impedance $Zs$ is calculated by the signal processing unit (120) according to the impedance sensing signal, and calculating an impedance change value dZs of the impedance $Zs$, wherein the impedance change value dZs is defined as follows:

$$dZs = (Zs(\gamma i) - Zs(0))/Zs(0) \quad (5)$$

wherein, Zs(yi) is an impedance between the first electrode (130) and the second electrode (125) measured in a urea solution with an impurity ion concentration $\gamma i$, and Zs(0) is an impedance between the first electrode (130) and the second electrode (125) measured in a urea solution conforming to an ISO 22241 standard; and the impurity ion concentration $\gamma i$ is obtained through a lookup table:

$$\gamma i = Tbl(dZs).$$

12. The method for measuring the quality of the urea solution according to claim 9, wherein, in the step 3.2, when the urea concentration in the urea solution is calculated by using the ultrasonic signal, the temperature $Ts$ of the urea solution is a function of a resistance Re of the first electrode (130), the resistance Re of the first electrode (130) is measured by the signal processing unit (120), and the urea concentration $\gamma_s$ in the urea solution is obtained through a 2-D lookup table:

$$\gamma_s = Qu = Tbl(Re, Tr)$$

wherein, Qu represents that the urea concentration $\gamma_s$ in the urea solution is calculated by using the ultrasonic wave.

13. The method for measuring the quality of the urea solution according to claim 9, wherein, in the step 3.2, when the urea concentration in the urea solution is calculated by using the ultrasonic signal, the temperature $Ts$ of the urea solution is measured by the first temperature sensing element (135), and the urea concentration $\gamma_s$ in the urea solution is obtained through a 2-D lookup table:

$$\gamma_s = Qu = Tbl(T135, Tr)$$

wherein, T135 represents the temperature of the urea solution measured by the first temperature sensing element (135), and Qu represents that the urea concentration $\gamma_s$ in the urea solution is calculated by using the ultrasonic wave.

14. The method for measuring the quality of the urea solution according to claim 10, wherein, in the step 3.3, when the urea concentration in the urea solution is calculated by using the impedance sensing signal, the temperature $Ts$ of the urea solution is a function of a resistance Re of the first electrode (130), and the resistance Re of the first electrode (130) is measured by the signal processing unit (120); and the impedance $Zs$ is a function of the resistance Re of the first electrode (130) and the urea concentration $\gamma_s$ in the urea solution:

$$Zs = g(Re, \gamma_s) \quad (4)$$

the urea concentration $\gamma_s$ in the urea solution is obtained through a 2-D lookup table:

$$\gamma_s = Qi = Tbl(Re, Zs)$$

wherein, Qi represents that the urea concentration $\gamma_s$ in the urea solution is calculated by using the impedance.

15. The method for measuring the quality of the urea solution according to claim 10, wherein, in the step 3.3, when the urea concentration in the urea solution is calculated by using the impedance sensing signal, the temperature *Ts* of the urea solution is measured by the first temperature sensing element (135), and the urea concentration $\gamma_s$ in the urea solution is obtained through a 2-D lookup table:

$$\gamma_s = Qi = \text{Tbl}(T135, Zs)$$

wherein, T135 represents the temperature of the urea solution measured by the first temperature sensing element (135), and Qi represents that the urea concentration $\gamma_s$ in the urea solution is calculated by using the impedance.

16. A fault detection method for a sensor for measuring quality of a urea solution, comprising the following steps of:

   step 1: receiving a sensing signal sent by a quality sensing element (100) by a signal processing unit (120), and judging whether an ultrasonic sensing element and an impedance sensing element are available; and
   step 2: when the ultrasonic sensing element and the impedance sensing element are both available, calculating a urea concentration in the urea solution by using an ultrasonic wave and an impedance respectively, and judging whether the sensor has an IR fault according to a difference between the two urea concentrations.

17. The fault detection method for the sensor for measuring the quality of the urea solution according to claim 16, wherein, the step 1 comprises:

   recording an amplitude value of an ultrasonic signal in the sensing signal as S_amp, comparing the amplitude value S_amp of the ultrasonic signal with a first threshold Thd_samp, and when the S_amp is not higher than the Thd_samp, judging the ultrasonic sensing element to be unavailable; and
   when the S_amp is higher than the Thd_samp, obtaining a peak time shift T_sft of the ultrasonic signal by calculating a difference between peak time Tpk and a normal value Tpk0:

$$T\_sft = Tpk - Tpk0$$

   comparing the peak time shift T_sft of the ultrasonic signal with a second threshold Thd_Tsft, and when the T_sft is not higher than the Thd_Tsft, judging the ultrasonic sensing element to be unavailable; and when the T_sft is higher than the Thd_Tsft, judging the ultrasonic sensing element to be available;
   wherein, a judgment condition of availability of the impedance sensing element comprises detecting whether the impedance sensing signal exceeds a maximum or minimum boundary measurement value thereof: when the impedance sensing signal is greater than the maximum boundary measurement value or less than the minimum boundary measurement value, judging the impedance sensing element to be unavailable, and when the impedance sensing signal is not greater than the maximum boundary measurement value or not less than the minimum boundary measurement value, judging the impedance sensing element to be available.

18. The fault detection method for the sensor for measuring the quality of the urea solution according to claim 16, wherein, the step 2 comprises: recording the urea concentration in the urea solution calculated by using the ultrasonic wave as QU_conc and the urea concentration in the urea solution calculated by using the impedance as QI_conc, and calculating the difference DEF_Diff between the two urea concentrations:

$$\text{DEF\_Diff} = \text{abs}(\text{QI\_conc} - \text{QU\_conc})$$

wherein, abs () refers to calculation of an absolute value, and when the value of the DEF_Diff is higher than a third threshold Thd_Ddiff, it is judged that the sensor has the IR fault and gives an alarm; and when the value of the DEF_Diff is not higher than the third threshold Thd_Ddiff, it is judged that the sensor has no IR fault.

**Amended claims under Art. 19.1 PCT**

1. A sensor for measuring quality of a urea solution, comprising a quality sensing element (100) and a signal processing unit (120), wherein the quality sensing element (100) is completely covered by the urea solution, and the signal processing unit (120) is electrically connected with the quality sensing element (100);

   the quality sensing element (100) is configured for receiving an excitation signal generated by the signal processing unit (120), generating a sensing signal, and sending the sensing signal to the signal processing unit (120), the quality sensing element (100) includes at least two different sensing elements; and
the signal processing unit (120) is configured for generating the excitation signal, sending the excitation signal to the quality sensing element (100), receiving the sensing signal sent by the quality sensing element (100), and calculating a quality sensing value of the urea solution according to the sensing signal, and the quality sensing value of the urea solution comprises a urea concentration and an impurity ion concentration in the urea solution.

2. The sensor for measuring the quality of the urea solution according to claim 1, wherein the quality sensing element (100) comprises an impedance sensing element and an ultrasonic sensing element, the impedance sensing element comprises a first electrode (130) and a second electrode (125), a urea solution between the first electrode (130) and the second electrode (125) is communicated with a urea solution in the ultrasonic sensing element, and one end of the second electrode (125) is electrically connected to the signal processing unit (120) through a second signal line (123); one end of the first electrode (130) is electrically connected to the signal processing unit (120) through a first signal line (128); and the ultrasonic sensing element is electrically connected to the signal processing unit (120) through a fifth signal line (115), and is configured for generating an ultrasonic wave according to the excitation signal sent by the signal processing unit (120), transmitting and receiving the ultrasonic wave, and sending a received ultrasonic signal to the signal processing unit (120).

3. The sensor for measuring the quality of the urea solution according to claim 2, wherein the signal processing unit (120) comprises a central processing unit (230), an ultrasonic signal processing sub unit (240) and an impedance signal processing sub unit (250), and

the central processing unit (230) is configured for sending commands to the ultrasonic signal processing sub unit (240) and the impedance signal processing sub unit (250), receiving the sensing signal processed by the ultrasonic signal processing sub unit (240) and the impedance signal processing sub unit (250), and calculating the quality sensing value of the urea solution according to the sensing signal;
the ultrasonic signal processing sub unit (240) is electrically connected with the ultrasonic sensing element through the fifth signal line (115), and is configured for receiving a first command sent by the central processing unit (230), generating a first excitation signal, sending the first excitation signal to the ultrasonic sensing element, receiving the ultrasonic signal sent by the ultrasonic sensing element, processing the ultrasonic signal, and then sending the ultrasonic signal to the central processing unit (230); and
the impedance signal processing sub unit (250) is electrically connected with one end of the first electrode (130) through the first signal line (128) and electrically connected with one end of the second electrode (125) through the second signal line (123), and is configured for receiving a second command sent by the central processing unit (230), generating a second excitation signal, sending the second excitation signal to the first electrode (130) and the second electrode (125) respectively, receiving an impedance sensing signal sent by the first electrode (130), processing the impedance sensing signal, and then sending the impedance sensing signal to the central processing unit (230).

4. The sensor for measuring the quality of the urea solution according to claim 3, wherein the signal processing unit (120) further comprises a resistance measurement module (260), and the resistance measurement module (260) is electrically connected with the other end of the first electrode (130) through a sixth signal line (126), and is configured for measuring a resistance of the first electrode (130), and sending the resistance value to the central processing unit (230).

5. The sensor for measuring the quality of the urea solution according to claim 3, wherein the signal processing unit (120) further comprises a resistance measurement module (260), the impedance sensing element further comprises a first temperature sensing element (135), the first temperature sensing element (135) is configured for measuring a temperature of the urea solution between the first electrode (130) and the second electrode (125), and is electrically connected with the resistance measurement module (260) through an eighth signal line (127), and the resistance measurement module (260) is configured for measuring a resistance value of the first temperature sensing element (135), and sending the resistance value to the central processing unit (230).

6. A method for measuring quality of a urea solution, comprising the following steps of:

step 1: sending an excitation signal to a quality sensing element (100) by a signal processing unit (120), wherein the excitation signal comprises a first excitation signal sent to an ultrasonic sensing element and a second excitation signal sent to a first electrode (130) and a second electrode (125);

step 2: receiving the excitation signal generated by the signal processing unit (120), generating a sensing signal, and sending the sensing signal to the signal processing unit (120) by the quality sensing element (100), wherein the sensing signal comprises an ultrasonic signal and an impedance sensing signal; and

step 3: receiving the sensing signal sent by the quality sensing element (100), and calculating a quality sensing value of the urea solution according to the sensing signal by the signal processing unit (120), wherein the calculating the quality sensing value of the urea solution comprises calculating a urea concentration in the urea solution and calculating an impurity ion concentration in the urea solution, and when calculating the impurity ion concentration in the urea solution, the impedance sensing signal is used to calculate the impurity ion concentration in the urea solution..

7. The method for measuring the quality of the urea solution according to claim 6, wherein, in the step 3, the calculating the urea concentration in the urea solution, comprises:

step 3.1: judging whether the ultrasonic sensing element is available;

step 3.2: when the ultrasonic sensing element is available, calculating the urea concentration in the urea solution by using the ultrasonic signal; and

step 3.3: when the ultrasonic sensing element is unavailable, calculating the urea concentration in the urea solution by using the impedance sensing signal.

8. The method for measuring the quality of the urea solution according to claim 7, wherein, the step 3.1 comprises: recording an amplitude value of the ultrasonic signal in the sensing signal as S_amp, comparing the amplitude value S_amp of the ultrasonic signal with a first threshold Thd_samp, and when the S_amp is not higher than the Thd_samp, judging the ultrasonic sensing element to be unavailable; and

when the S_amp is higher than the Thd_samp, obtaining a peak time shift T_sft of the ultrasonic signal by calculating a difference between peak time Tpk and a normal value Tpk0:

$$\text{T\_sft=Tpk-Tpk0;}$$

and

comparing the peak time shift T_sft of the ultrasonic signal with a second threshold Thd_Tsft, and when the T_sft is not higher than the Thd_Tsft, judging the ultrasonic sensing element to be unavailable; and when the T_sft is higher than the Thd_Tsft, judging the ultrasonic sensing element to be available.

9. The method for measuring the quality of the urea solution according to claim 7, wherein, in the step 3.2, the calculating the urea concentration in the urea solution by using the ultrasonic signal, comprises:

recording propagation time of the ultrasonic wave in the urea solution as Tr and a propagation distance of the ultrasonic wave as Ds, wherein the propagation time Tr is calculated by the signal processing unit (120) according to the sent first excitation signal and the received ultrasonic signal, and a relationship between a value of the propagation time Tr and a propagation speed Cs of the ultrasonic wave satisfies the following formula:

$$Cs=\text{Ds}/\text{Tr} \quad (1)$$

when the ultrasonic wave is propagated in the urea solution, the propagation speed $Cs$ is determined by a bulk modulus $K$ and a density $\rho$ of the urea solution:

$$Cs = \sqrt{\frac{K}{\rho}} \quad (2)$$

wherein, values of the bulk modulus $K$ and the density $\rho$ both change with changes of concentration and temperature of the urea solution; and since the propagation distance Ds of the ultrasonic wave is a fixed value and the propagation speed $Cs$ of the ultrasonic wave is a function of the propagation time Tr of the ultrasonic wave, the urea concentration $\gamma_s$ in the urea solution is calculated according to the propagation time Tr of the ultrasonic wave and the temperature $Ts$ of the urea solution.

10. The method for measuring the quality of the urea solution according to claim 7, wherein, in the step 3.3, the calculating the urea concentration in the urea solution by using the impedance sensing signal, comprises:

recording an impedance between the first electrode (130) and the second electrode (125) as $Zs$, wherein the impedance $Zs$ is calculated by the signal processing unit (120) according to the impedance sensing signal, and is also a function of the temperature $Ts$ of the urea solution and the urea concentration $\gamma_s$ in the urea solution:

$$Zs = f(Ts, \gamma_s) \quad (3)$$

so that the urea concentration $\gamma_s$ in the urea solution is calculated by using the impedance $Zs$ and the temperature $Ts$ of the urea solution.

11. The method for measuring the quality of the urea solution according to claim 9, wherein, in the step 3, when the impurity ion concentration in the urea solution is calculated, the ultrasonic sensing element is available, and the impurity ion concentration in the urea solution is calculated by using the impedance sensing signal, which comprises:

recording an impedance between the first electrode (130) and the second electrode (125) as $Zs$, wherein the impedance $Zs$ is calculated by the signal processing unit (120) according to the impedance sensing signal, and calculating an impedance change value dZs of the impedance $Zs$, wherein the impedance change value dZs is defined as follows:

$$dZs = (Zs(\gamma i) - Zs(0))/Zs(0) \quad (5)$$

wherein, $Zs(\gamma i)$ is an impedance between the first electrode (130) and the second electrode (125) measured in a urea solution with an impurity ion concentration $\gamma i$, and Zs(0) is an impedance between the first electrode (130) and the second electrode (125) measured in a urea solution conforming to an ISO 22241 standard; and the impurity ion concentration $\gamma i$ is obtained through a lookup table:

$$\gamma i = Tbl(dZs).$$

12. The method for measuring the quality of the urea solution according to claim 9, wherein, in the step 3.2, when the urea concentration in the urea solution is calculated by using the ultrasonic signal, the temperature $Ts$ of the urea solution is a function of a resistance Re of the first electrode (130), the resistance Re of the first electrode (130) is measured by the signal processing unit (120), and the urea concentration $\gamma_s$ in the urea solution is obtained through a 2-D lookup table:

$$\gamma_s = Qu = Tbl(Re, Tr)$$

wherein, Qu represents that the urea concentration $\gamma_s$ in the urea solution is calculated by using the ultrasonic wave.

13. The method for measuring the quality of the urea solution according to claim 9, wherein, in the step 3.2, when the urea concentration in the urea solution is calculated by using the ultrasonic signal, the temperature $Ts$ of the urea solution is measured by the first temperature sensing element (135), and the urea concentration $\gamma_s$ in the urea solution is obtained through a 2-D lookup table:

$$\gamma_s = Qu = Tbl(T135, Tr)$$

wherein, T135 represents the temperature of the urea solution measured by the first temperature sensing element (135), and Qu represents that the urea concentration $\gamma_s$ in the urea solution is calculated by using the ultrasonic wave.

14. The method for measuring the quality of the urea solution according to claim 10, wherein, in the step 3.3, when the urea concentration in the urea solution is calculated by using the impedance sensing signal, the temperature $Ts$ of the urea solution is a function of a resistance Re of the first electrode (130), and the resistance Re of the first electrode (130) is measured by the signal processing unit (120); and the impedance $Zs$ is a function of the resistance Re of the first electrode (130) and the urea concentration $\gamma_s$ in the urea solution:

$$Zs = g(Re, \gamma_s) \quad (4)$$

the urea concentration $\gamma_s$ in the urea solution is obtained through a 2-D lookup table:

$$\gamma_s = Qi = Tbl(Re, Zs)$$

wherein, Qi represents that the urea concentration $\gamma_s$ in the urea solution is calculated by using the impedance.

15. The method for measuring the quality of the urea solution according to claim 10, wherein, in the step 3.3, when the urea concentration in the urea solution is calculated by using the impedance sensing signal, the temperature $Ts$ of the urea solution is measured by the first temperature sensing element (135), and the urea concentration $\gamma_s$ in the urea solution is obtained through a 2-D lookup table:

$$\gamma_s = Qi = Tbl(T135, Zs)$$

wherein, T135 represents the temperature of the urea solution measured by the first temperature sensing element (135), and Qi represents that the urea concentration $\gamma_s$ in the urea solution is calculated by using the impedance.

16. A fault detection method for a sensor for measuring quality of a urea solution, which is used for any one of the sensor for measuring the quality of the urea solution according to claim 1-5, comprising the following steps of:

    step 1: receiving a sensing signal sent by a quality sensing element (100) by a signal processing unit (120), and judging whether an ultrasonic sensing element and an impedance sensing element are available; and
    step 2: when the ultrasonic sensing element and the impedance sensing element are both available, calculating a urea concentration in the urea solution by using an ultrasonic wave and an impedance respectively, and judging whether the sensor has an IR fault according to a difference between the two urea concentrations.

17. The fault detection method for the sensor for measuring the quality of the urea solution according to claim 16, wherein, the step 1 comprises:

    recording an amplitude value of an ultrasonic signal in the sensing signal as S_amp, comparing the amplitude value S_amp of the ultrasonic signal with a first threshold Thd_samp, and when the S_amp is not higher than the Thd_samp, judging the ultrasonic sensing element to be unavailable; and
    when the S_amp is higher than the Thd_samp, obtaining a peak time shift T_sft of the ultrasonic signal by calculating a difference between peak time Tpk and a normal value Tpk0:

$$T\_sft = Tpk - Tpk0$$

    comparing the peak time shift T_sft of the ultrasonic signal with a second threshold Thd_Tsft, and when the T_sft is not higher than the Thd_Tsft, judging the ultrasonic sensing element to be unavailable; and when the T_sft is higher than the Thd_Tsft, judging the ultrasonic sensing element to be available;
    wherein, a judgment condition of availability of the impedance sensing element comprises detecting whether the impedance sensing signal exceeds a maximum or minimum boundary measurement value thereof: when the impedance sensing signal is greater than the maximum boundary measurement value or less than the minimum boundary measurement value, judging the impedance sensing element to be unavailable, and when the impedance sensing signal is not greater than the maximum boundary measurement value or not less than the minimum boundary measurement value, judging the impedance sensing element to be available.

18. The fault detection method for the sensor for measuring the quality of the urea solution according to claim 16, wherein, the step 2 comprises: recording the urea concentration in the urea solution calculated by using the ultrasonic wave as QU_conc and the urea concentration in the urea solution calculated by using the impedance as QI_conc, and calculating the difference DEF_Diff between the two urea concentrations:

$$DEF\_Diff = abs(QI\_conc - QU\_conc)$$

wherein, abs () refers to calculation of an absolute value, and when the value of the DEF_Diff is higher than a third threshold Thd_Ddiff, it is judged that the sensor has the IR fault and gives an alarm; and when the value of the DEF_Diff is not higher than the third threshold Thd_Ddiff, it is judged that the sensor has no IR fault.

FIG. 1

FIG. 2

FIG. 3

FIG. 4

FIG. 5

FIG. 6

FIG. 7

FIG. 8

## INTERNATIONAL SEARCH REPORT

| International application No. |
| --- |
| **PCT/CN2023/095041** |

### A. CLASSIFICATION OF SUBJECT MATTER

F01N11/00(2006.01)i; G01N29/024(2006.01)i; G01N27/02(2006.01)i

According to International Patent Classification (IPC) or to both national classification and IPC

### B. FIELDS SEARCHED

Minimum documentation searched (classification system followed by classification symbols)

IPC:F01N,G01N

Documentation searched other than minimum documentation to the extent that such documents are included in the fields searched

Electronic data base consulted during the international search (name of data base and, where practicable, search terms used)

CNABS, CNTXT, DWPI; VEN; CNKI: 尿素, 浓度, 阻抗, 电阻, 超声, 传感器, urea, concentration, impedance, resistance, ultra +, sensor

### C. DOCUMENTS CONSIDERED TO BE RELEVANT

| Category* | Citation of document, with indication, where appropriate, of the relevant passages | Relevant to claim No. |
| --- | --- | --- |
| PX | CN 115822764 A (NINGBO KAISHI ENVIRONMENTAL PROTECTION TECHNOLOGY CO., LTD.) 21 March 2023 (2023-03-21) description, paragraphs 0087-0173, and figures 1-8 | 1-18 |
| PX | CN 115932037 A (NINGBO KAISHI ENVIRONMENTAL PROTECTION TECHNOLOGY CO., LTD.) 07 April 2023 (2023-04-07) description, paragraphs 0090-0157, and figures 1-5 | 1-5 |
| X | CN 211343077 U (WUHAN MUZHISHENG ELECTRONIC TECHNOLOGY CO., LTD.) 25 August 2020 (2020-08-25) description, paragraphs 0041-0056, and figure 1 | 1,6 |
| Y | CN 211343077 U (WUHAN MUZHISHENG ELECTRONIC TECHNOLOGY CO., LTD.) 25 August 2020 (2020-08-25) description, paragraphs 0041-0056, and figure 1 | 2-5, 7-15 |
| X | CN 114441631 A (DONGFENG AUTOMOBILE CO., LTD.) 06 May 2022 (2022-05-06) description, paragraphs 0024-0034, claims 1-5, and figure 1 | 16-18 |
| Y | CN 114441631 A (DONGFENG AUTOMOBILE CO., LTD.) 06 May 2022 (2022-05-06) description, paragraphs 0024-0034, claims 1-5, and figure 1 | 2-5, 7-15 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 August 2023** | **14 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/095041** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 113866263 A (HUBBLE SMART SENSING (SHENZHEN) CO., LTD.) 31 December 2021 (2021-12-31) entire document | 1-18 |
| A | CN 114718709 A (JIANGLING MOTORS CO., LTD.) 08 July 2022 (2022-07-08) entire document | 1-18 |
| A | CN 211819586 U (WEICHAI POWER CO., LTD.) 30 October 2020 (2020-10-30) entire document | 1-18 |
| A | DE 102015212622 A1 (ROBERT BOSCH GMBH) 12 January 2017 (2017-01-12) entire document | 1-18 |

Form PCT/ISA/210 (second sheet) (July 2022)

**INTERNATIONAL SEARCH REPORT**
Information on patent family members

International application No.

**PCT/CN2023/095041**

| Patent document cited in search report | | | Publication date (day/month/year) | Patent family member(s) | Publication date (day/month/year) |
|---|---|---|---|---|---|
| CN | 115822764 | A | 21 March 2023 | None | |
| CN | 115932037 | A | 07 April 2023 | None | |
| CN | 211343077 | U | 25 August 2020 | None | |
| CN | 114441631 | A | 06 May 2022 | None | |
| CN | 113866263 | A | 31 December 2021 | None | |
| CN | 114718709 | A | 08 July 2022 | None | |
| CN | 211819586 | U | 30 October 2020 | None | |
| DE | 102015212622 | A1 | 12 January 2017 | None | |

Form PCT/ISA/210 (patent family annex) (July 2022)